# EUROPEAN PATENT APPLICATION

(11) **EP 1 724 766 A1**
(43) Date of publication of application: **22.11.2006**
(21) Application number: 05010729.1
(22) Date of filing: 18.05.2005
(51) Int. Cl.: G11B 7/09

(54) **Pickup for optical recording media and device having the pickup**

(71) Applicant: DEUTSCHE THOMSON-BRANDT GMBH, 78048 Villingen-Schwenningen (DE)
(72) Inventor: Bammert, Michael, 78739 Hardt (DE); Suzuki, Tsuneo, 78087 Mönchweiler (DE)
(74) Representative: Thies, Stephan

(57) **Abstract**

The invention refers to a pickup (P) for optical recording media having information tracks in a layer, and to a device for accessing optical recording media having such pickup. The pickup has a focusing servo for position control in a focussing direction (F) orthogonal to the layer, a tracking servo for position control in a tracking direction (T) within the layer and diagonal to the information tracks, and a movable actuator (8) with coils (9, 10, 15) interacting with magnets (1, 2, 3, 4, 5, 6) on a pickup base (7), the magnets comprising main magnets (1, 2) and side magnets (3, 4, 5, 6). In order to avoid a reduced tilt sensitivity caused by the magnetic field of the side magnets being detrimental on tilt coils extending into their vicinity, the side magnets (3, 4, 5, 6) are shaped smaller than the main magnets (1, 2) in the focussing direction (F).

## Description

### Field of the invention

The present invention relates to a pickup for optical recording media, in particular to a mechanical layout of magnets thereof, and to a device for accessing optical recording media having the pickup.

### Background of the invention

In apparatus to read from or write to optical recording media having information tracks, a pickup is employed to access locations of the recording medium. For following the information tracks, the medium and the pickup are being moved relative to each other. In the pickup, typically, one or more light beams are generated, are focused onto a target spot on a layer within the medium, and when reading the medium, one or more readout beams coming from the target spot are projected onto a photodetector, where they are converted into electrical signals for further evaluation.

Due to mechanical tolerances, mounting of the medium in the apparatus may be offset from a nominal position, or orientation of the medium may be misaligned relative to the optical axis of the light beam, or both. Because of the relative motion between the medium and the pickup, these imperfections cause a position error in the form of a long-lasting offset of the target spot relative to its nominal position or in the form of a quick variation of the target spot relative to and around the nominal position, or in the form of a mixture of offset and variation. The position error may occur within the layer in a direction at least substantially diagonal or perpendicular to the information tracks where it is often called tracking error, the direction correspondingly being called tracking direction; it also may occur in a direction at least substantially perpendicular to the layer where it is often called focus error, the direction correspondingly being called focussing direction; or it occurs in the form that the orientation of the medium relative to the pickup deviates from a nominal orientation, which form is often called tilt error.

To keep the light beam focused on the target spot and to keep the readout beam on the photodetector, optical media pickups typically have a so-called actuator. The actuator, typically, has a movable part which is positioned by magnets interacting with coils onto which electrical currents are imposed. A so-called tracking servo loop controls the position of the movable part in the tracking direction, a so-called focus servo loop controls the position of the movable part in the focussing direction, and a so-called tilt servo loop controls the angle of the readout beam which in turn influences the incidence of the readout beam onto the photodetector.

For optical pickup actuators, side magnets in addition to main magnets can be used to increase the tracking sensitivity measured for instance by the amount of deflection in the tracking direction per tracking coil current. Such side magnets have a magnetization direction different from that of the main magnets, and the increase in tracking sensitivity is achieved because plural parts of the tracking coil windings instead of only one have a magnetic field to interact with, these magnetic fields being oriented such that the resulting Lorentz forces add in the tracking direction.

Advanced optical recording media have high recording densities and are known to be sensitive with respect to tilt. Tilt control can be achieved with dedicated tilt coils interacting with the magnets. In a widely used design, the tilt coils are positioned in the same plane as a focus coil, other designs are possible. By having two tilt coils side by side in the tracking direction, or by having different magnets interacting with a single tilt coil, a force directed towards the media surface in one part of the movable part of the actuator and a force directed away from the media surface in another, laterally remote part of the actuator are generated. Together, these forces result in a tilt-compensating torque. To maximize the torque, the tilt coil or coils advantageously are wide or wide apart in the tracking direction, because then the lever arm of the two opposing forces is big.

Hence it is known that a pickup for optical recording media with a tracking servo for position control in a tracking direction and with a focus servo for position control in a focussing direction has a movable actuator with coils interacting with magnets on a pickup base, where the magnets comprise main magnets and side magnets of a different magnetization direction than the main magnets.

### Invention

Actuators with side magnets to increase tracking sensitivity can be seen to have a drawback of a reduced tilt sensitivity when they have a tilt servo, because the magnetic field of the side magnets can be detrimental on tilt coils extending into their vicinity. A problem to be solved by the invention is to propose a pickup with an actuator that is improved in this regard.

A pickup according to the invention is provided with side magnets whose elongation in focussing direction is smaller than the corresponding elongation of the main magnets. By this design, the magnetic field of the side magnets can advantageously be kept further away from the tilt coils, so that tilt sensitivity is increased by reducing the height, i.e. elongation in focussing direction, of the side magnets. This is because for maximum sensitivity the tilt coils, other than the tracking coils, need a homogeneous magnetic field.

Advantageously, those surfaces or sides of the main magnets and of the side magnets which face towards the recording medium are on the same level, whereas the height, i.e. the elongation in the focussing direction, of the main magnet is bigger than the corresponding elongation of the side magnets. This is advantageous for the case where tilt coils are arranged further away from the recording medium surface than the tracking coils. By the different elongation of main and side magnets, then, that part of the main magnet which interacts with the active parts of the tilt coils can exhibit its full magnetic field in a way not diminished by a counteracting opposing field of any side magnet. Hence the efficiency of the interaction between tilt coil and magnet will be improved. Having one surface or side of all magnets on the same level is advantageous for mounting and alignment purposes.

The advantages of the invention are particularly pronounced in pickups where tracking coils are arranged in a plane perpendicular to a scanning direction parallel to the information tracks, where the tracking coil plane is parallel to the magnet surface, and where tilt coils are arranged in a plane parallel to the recording media surface. In this case the tilt coils comprise active parts which face the magnets and are diagonal to the magnetic lines of force as well as inactive parts roughly parallel to the lines of force. The active parts of the tilt coils face only a fraction of the main magnet surface, and the magnetic field of the side magnets can efficiently be kept away from that fraction of the main magnet by shortening the side magnets in that area or equivalently by not having side magnets there and having side magnets attached only to those parts of the main magnet that face only the tracking coils.

Advantageously, tilt coils of the actuator are shaped and arranged in such a way that they face the main magnets at a portion thereof which has no side magnets mounted thereto.

A device according to the invention is a device for accessing optical recording media and has a pickup as described herein.

Exemplary embodiments of the invention are illustrated in the drawings and are explained in more detail in the following description. They refer to the recording medium being an optical disk and to the readout beam being a reflected beam. Despite this, it is clear to those in the art that the invention can be employed on any kind of optical recording medium having information tracks in layers, like those in card or tape form; and regardless whether the readout principle is of a reflective or of a transductive type.

### Brief description of drawings

- Fig. 1: shows a first view of a pickup according to the invention;

- Fig. 2: shows a second view of a pickup according to the invention;
- Fig. 3: shows a plan view in scanning direction of magnets and coils of an actuator according to the invention.

### Detailed description of preferred embodiments

A common type of optical recording media is optical disk. In optical disk media, information tracks are shaped as spirals or concentric circles. In pickups for optical disks, motion of the medium relative to the pickup is achieved by rotating the disk, for example by a so-called spindle motor, and by moving the pickup in a radial direction relative to the centre of the disk, for example by a step motor or a threaded spindle or an equivalent linear positioning device of the art.

In a pickup with an optical disk, the tracking direction corresponds to the radial direction, and the focussing direction corresponds to an axial direction parallel to the rotation axis of the disk.

In the following description, a reflective optical disk is assumed, where the readout beam corresponds to the reflected light beam resulting from the incident light beam being reflected by an outer or inner surface or layer of the disk.

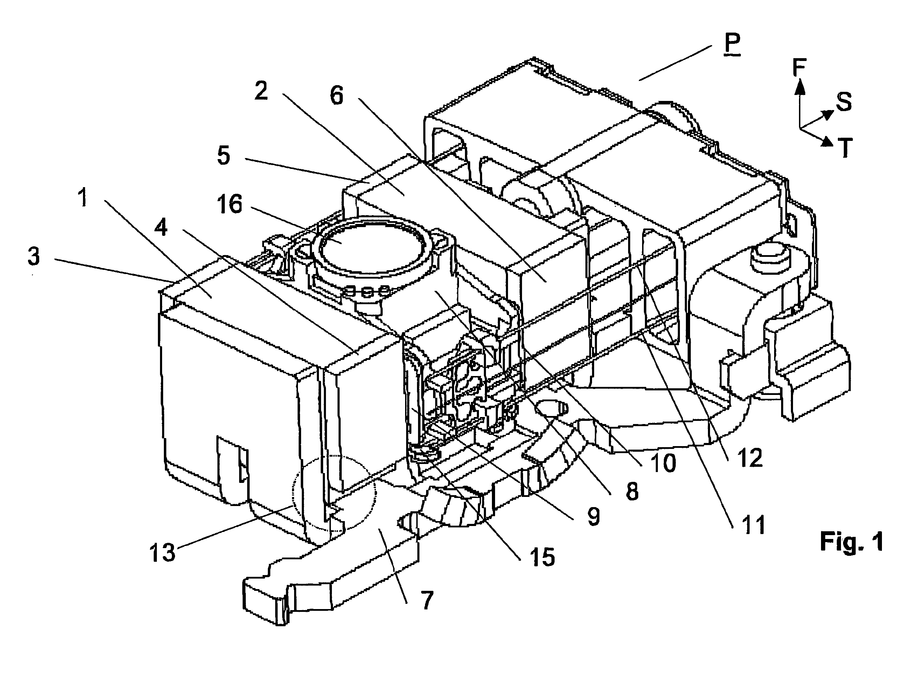

Fig. 1 shows a first view of a pickup P according to the invention. Main magnets 1, 2 and side magnets 3, 4, 5, 6 are mounted on an actuator base 7, and a movable actuator part 8 carrying a lens 16 has tracking coils 9, 10 and tilt coils 15 interacting with the magnets 1, 2, 3, 4, 5, 6. A disk being accessed, not shown, would be situated above the arrangement shown, in a way that the lens 16 faces towards the disc surface, and that the disc surface is parallel to the plane spanned by the tracking direction T and the scanning direction S.

A suspension with suspension wires 11, 12 allows the movable actuator part 8 to move in the focussing direction F and in the tracking direction T, while it is fixed in the scanning direction S. In a first area 13 it is shown that the side magnet 4 is shorter in focussing direction F than the main magnet 1. The opposing side magnet 3, although not visible, is also shortened likewise.

According to the invention, tilt sensitivity is increased by reducing the height of the side magnets 3, 4, 5, 6. With the width of each of the side magnets 3, 4, 5, 6 being smaller than the width of the main magnet 1, 2, a height reduction of the side magnets 3, 4, 5, 6 by about 15% has been found to result in a tilt sensitivity increase of about 20%, while tracking sensitivity is reduced not more than 1-2%. An advantage of reduced side magnet height is that a negative influence of side magnets on tilt sensitivity is countered and tracking and focus sensitivity are not much modified.

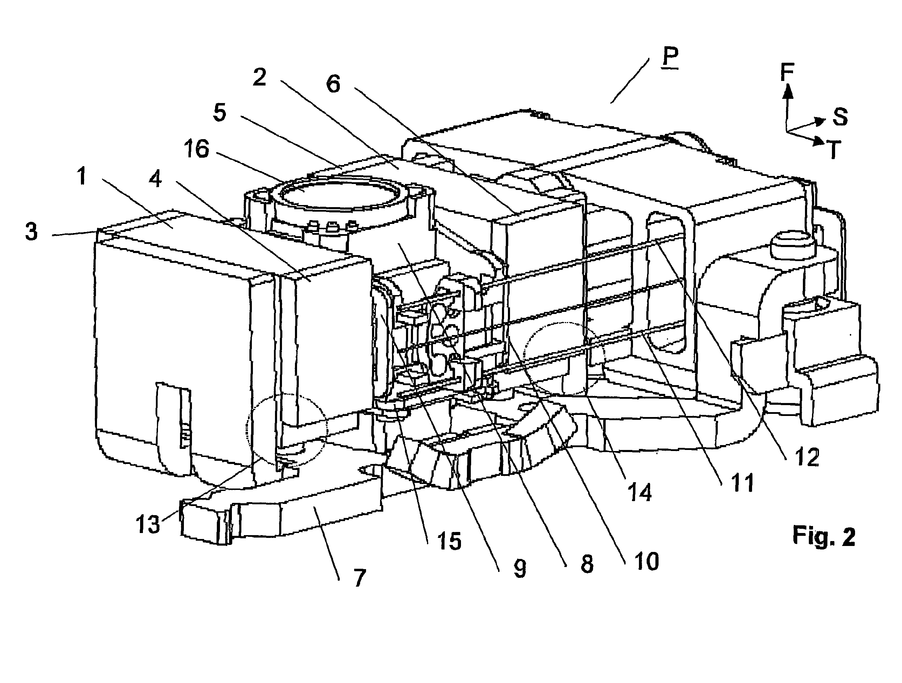

Fig. 2 shows a second view of a pickup according to the invention, identical elements bearing identical references. In this view it is shown that also in a second area 14 the side magnet 6 is shorter in focussing direction F than the main magnet 2. Here, too, the opposing side magnet 5, although not visible, is also shortened likewise.

If the part of the tilt coil 15 facing towards the magnets 1, 4 has the same cross section or profile as the part of the tilt coil 15 facing towards the other magnets 2, 6, it will typically be appropriate that the elongation difference at area 13 be the same as the corresponding difference at area 14. If, however, the coil cross sections or profiles differ, or if the magnet strengths differ, a non-equal elongation difference may be more appropriate for achieving the invention's advantages.

As Figures 1 and 2 show, main magnets and side magnets are level towards the disk, but differ in height, i.e. in their elongation in the focussing direction, at the end facing away from the disk. This is advantageous for the case where tilt coils are arranged further away from the disk surface than the tracking coils. A reciprocal design is as well possible, where magnet surfaces facing away from the disk are level, and magnet elongation is different in the vicinity of the recording medium. Such design is beneficial if the tilt coils are arranged closer to the disk surface than the tracking coils.

In a further variant, there may even be designs, not shown, where the tilt coils are arranged somewhere near the middle height of the tracking coils. In this case, in order to maximise tracking sensitivity by side magnets and at the same time keep away from the tilt coils, as much as possible, the field of the side magnets, the main magnets must advantageously be exempted from side magnets in a vicinity of where active parts of tilt coils interact with the main magnets. This results in divided side magnets having a gap in the vicinity of the tilt coils.

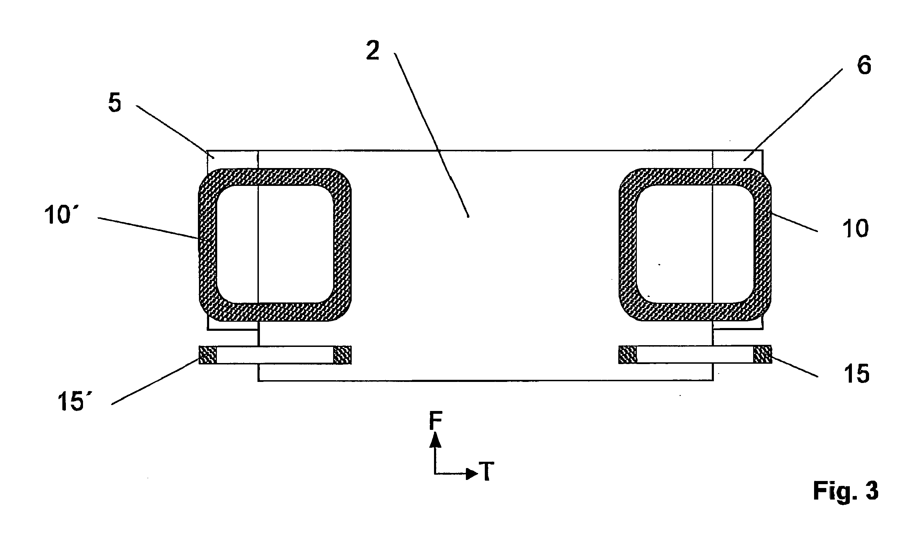

Fig. 3 shows a main magnet 2, side magnets 5, 6, tracking coils 10, 10' and tilt coils 15, 15' of an actuator according to the invention, viewed in scanning direction. It can be seen that the active parts of the tracking coils 10, 10', i.e. those parts depicted in vertical or focussing direction F, interact with the main magnet 2 and the side magnets 5, 6 of different magnetization direction in such a way that they all contribute positively to generate a tracking force in the tracking direction T.

As the Figure shows, the side magnets 5, 6 are shortened in such a way that the active part of the tilt coils 15, 15' is outside the magnetic field of the side magnets 5, 6. Hence, interaction of the tilt coils 15, 15' with the magnetic field of the main magnet 2 is undiminished or only slightly diminished by any counteracting opposing field of side magnets 5, 6.

## Claims

1. A pickup (P) for optical recording media having information tracks in a layer, the pickup having a focusing servo for position control in a focussing direction (F) substantially orthogonal to the layer, the pickup having a tracking servo for position control in a tracking direction (T) within the layer and diagonal to the information tracks, and having a movable actuator (8) with coils (9, 10, 15) interacting with magnets (1, 2, 3, 4, 5, 6) on a pickup base (7), where the magnets comprise main magnets (1, 2) and side magnets (3, 4, 5, 6) of a different magnetization direction than the main magnets (1, 2), **characterized in that** in the focussing direction (F) the side magnets (3, 4, 5, 6) are smaller than the main magnets (1, 2).

2. The pickup of claim 1, where surfaces of the main magnets (1, 2) and the side magnets (3, 4, 5, 6) which face towards the recording medium are arranged on a same level, whereas in the focussing direction (F) an elongation of the main magnet (1, 2) is bigger than the elongation of the side magnets (3, 4, 5, 6).

3. The pickup of claim 1 or 2, having a tilt servo for controlling an orientation of the pickup relative to the recording medium, where the coils (9, 10, 10', 15, 15') comprise tracking coils (9, 10, 10') arranged in a plane perpendicular to a scanning direction parallel to the information tracks, and tilt coils (15, 15') arranged in a plane parallel to the layer.

4. The pickup of claim 3, where the side magnets (3, 4, 5, 6) end in the focussing direction (F) above active parts of the tilt coils (15, 15').

5. The pickup of claim 3, where the main magnets (1, 2) are exempted from side magnets (3, 4, 5, 6) in a vicinity of where active parts of tilt coils (15, 15') interact with the main magnets (1, 2).

6. A device for accessing optical recording media, the device **characterised in that** it is provided with a pickup according to one of the previous claims.
